# EUROPEAN PATENT SPECIFICATION

(11) **EP 1 260 095 B1**
(45) Date of publication and mention of the grant of the patent: **07.12.2005**
(21) Application number: 01909070.3
(22) Date of filing: 09.02.2001
(51) Int. Cl.: H04N 3/15

(54) **MULTIPLEX BUCKET BRIGADE CIRCUIT**
MEHRFACHE EIMERKETTENSCHALTUNG
CIRCUIT MULTIPLEX CHAPELETS

(43) Date of publication of application: 27.11.2002
(73) Proprietor: RAYTHEON COMPANY, Lexington, Massachusetts 02421 (US)
(72) Inventor: HEWITT, Mary, J., Santa Barbara, CA 93111 (US); VAMPOLA, John, L., Santa Barbara, CA 93111 (US); CHEN, Leonard, P., Santa Barbara, CA 93105 (US)
(74) Representative: Jackson, Richard Eric
(86) International application number: PCT/US2001/004306
(87) International publication number: WO 2002/065759

(56) References cited:
- US-A- 5 402 168
- US-A- 5 828 408

## Description

### Field of the Invention:

The present invention relates to circuits useful in processing the output of image sensing arrays. More specifically, the present invention relates to Time Delay Integration ("TDI") circuits useful in processing the output of image sensing arrays.

### Description of the Related Art:

While Time Delay Integration ("TDI") architecture is typically found in high speed digital image sensing devices such as Charge Coupled Device ("CCD") image sensors to achieve satisfactory sensitivity, it has utility with many various types of image sensing arrays variously sensitive to, for example, the infrared, visible light, and X-ray wavelengths. In the TDI architecture, the image sensing array is optically scanned so that each part of the image is sensed with different parts, typically lines, of the array in a synchronized, delayed manner. The plural outputs over time of the image sensing array for each part of the image are summed, thereby improving the sensitivity and spatial resolution of the image sensing device. One measure of performance of image sensing devices is the Modulation Transfer Function ("MTF"), which is defined as the ratio of the modulation of the output signal to the modulation of the input signal, versus spatial frequency.

Typically, the TDI circuits are implemented in a type of silicon-based integrated circuit known as a Read-Out Integrated Circuit ("ROIC"), which is combined with the sensing array to form a Sensor Chip Assembly ("SCA"). SCAs are used in a variety of digital imaging systems, including, for example, night vision cameras, surveillance cameras, remote imaging cameras, and manufacturing line inspection cameras, and are suitable even for standard army dewar assembly ("SADA") type applications and three color activities. Three color activities are scanning systems which incorporate more than one spectral band, or color, on a SCA.

Each of the colors is defined by a bank of sensing elements on which a single spectral color is incident. SCAs are particularly useful when the sensing array is made of a non-silicon semiconductor material, which is typical since non-silicon semiconductor materials are inherently sensitive to various useful portions of the electromagnetic spectrum. Image information in the form of electrical charge is produced in the imaging array. The charge is collected and processed by the typically silicon-based ROIC. SCAs are manufactured using a variety of well known techniques, ranging from fabricating the sensing array separately from the ROIC and mounting the sensing array and ROIC on a common substrate or a common printed circuit board, to mounting the sensing array substrate on the ROIC substrate and then fabricating the sensing array.

Time delay integration may be performed in a SCA TDI architecture using a CCD array in a "side rider" configuration. Unfortunately, the design rules used for the integrated circuit do not allow for placing large storage wells and the other elements of the circuit in the unit cell for small unit cell areas, thereby limiting the maximum resolution of the CCD sensing device. While time delay integration can also be implemented using standard bucket brigade ("BBD") circuits instead of CCDs, a need exists in the art for a TDI circuit that is useful in processing the output of image sensing arrays and has reduced ROIC circuitry relative to the ROIC circuitry required in the side rider CCD implementation while maintaining or improving MTF.

U.S. 5,315,114 discloses an integrated circuit detector array incorporating bucket brigade devices for time delay and integration.

### SUMMARY OF THE INVENTION

The need in the art is addressed by the present invention, which in one embodiment is a time delay integration circuit for acquiring a first plurality n of samples per dwell, comprising:
a first plurality *n* of charge transfer paths, each comprising transfer gates, the transfer gates of each path coupled in series through path segments located therebetween;
a second plurality of first capacitors;
a second plurality of imaging sensor unit cell inputs coupled through switches respectively to the first capacitors;
a second plurality of groups of *n* second capacitors, characterised in that:
   a first side of each first capacitor is connected to a pair of path segments in different charge transfer paths;
   a first side of each capacitor in each group of said second plurality of groups of *n* second capacitors is connected to a path segment in a different charge transfer path and the second sides of the capacitors in each group are connected to each other; and
   the transfer gates of each path are connected such that a first side of each transfer gate is coupled to a first capacitor and the second side of each transfer gate is coupled to a respective one of said n second capacitors in a group, the transfer gates of each path, in succession, being alternately enabled to transfer charge from said respective ones of said *n* second capacitors to the first capacitors and from the first capacitors to respective ones of the second capacitors.

Another embodiment of the present invention is a method of time delay integration of image sensor charges using a time delay integration circuit of the present invention, comprising:
storing accumulated image sensor charges from alternate sensor lines on respectively a plurality of first capacitors and a plurality of second capacitors;
resetting a plurality of third capacitors;
receiving a first set of image sensor charges on the third capacitors;
transferring charge from the first capacitors respectively to the third capacitors through a set of first transfer gates, wherein charge is accumulated on the third capacitors;
transferring charge from the third capacitors respectively to the first capacitors through a set of second transfer gates;
resetting the third capacitors;
receiving a second set of image sensor charges on the third capacitors;
transferring charge from the second capacitors respectively to the third capacitors through a set of third transfer gates, wherein charge is accumulated on the third capacitors; and
transferring charge from the third capacitors respectively to the second capacitors through a set of fourth transfer gates.

### BRIEF DESCRIPTION OF THE DRAWINGS

Figure 1 is a block schematic diagram of a CCD-based side rider SCA architecture.
Figure 2 is a circuit diagram of a bucket brigade circuit.
Figure 3 is a circuit diagram of a duplex bucket brigade circuit for a two sample per dwell SCA TDI, in accordance with the present invention.
Figure 4 is a circuit diagram of the duplex bucket brigade circuit of Figure 3 showing how unit cell charge is transferred into the circuit.
Figure 5 is a circuit diagram of the duplex bucket brigade circuit of Figure 3 showing how unit cell charge is added to previous even samples.
Figure 6 is a circuit diagram of the duplex bucket brigade circuit of Figure 3 showing how common capacitor charge is moved to the even path capacitors.
Figure 7 is a circuit diagram of the duplex bucket brigade circuit of Figure 3 showing how the common capacitors are reset.
Figure 8 is a circuit diagram of the duplex bucket brigade circuit of Figure 3 showing how unit cell charge is transferred into the circuit.
Figure 9 is a circuit diagram of the duplex bucket brigade circuit of Figure 3 showing how unit cell charge is added to previous odd samples.
Figure 10 is a circuit diagram of the duplex bucket brigade circuit of Figure 3 showing how common capacitor charge is moved to the odd path capacitors.
Figure 11 is a waveform diagram of various clock and control signals used in the transfer up process.
Figure 12 is a waveform diagram of various clock and control signals used in the transfer down process.

### DESCRIPTION OF THE INVENTION

Illustrative embodiments and exemplary applications will now be described with reference to the accompanying drawings to disclose the advantageous teachings of the present invention.

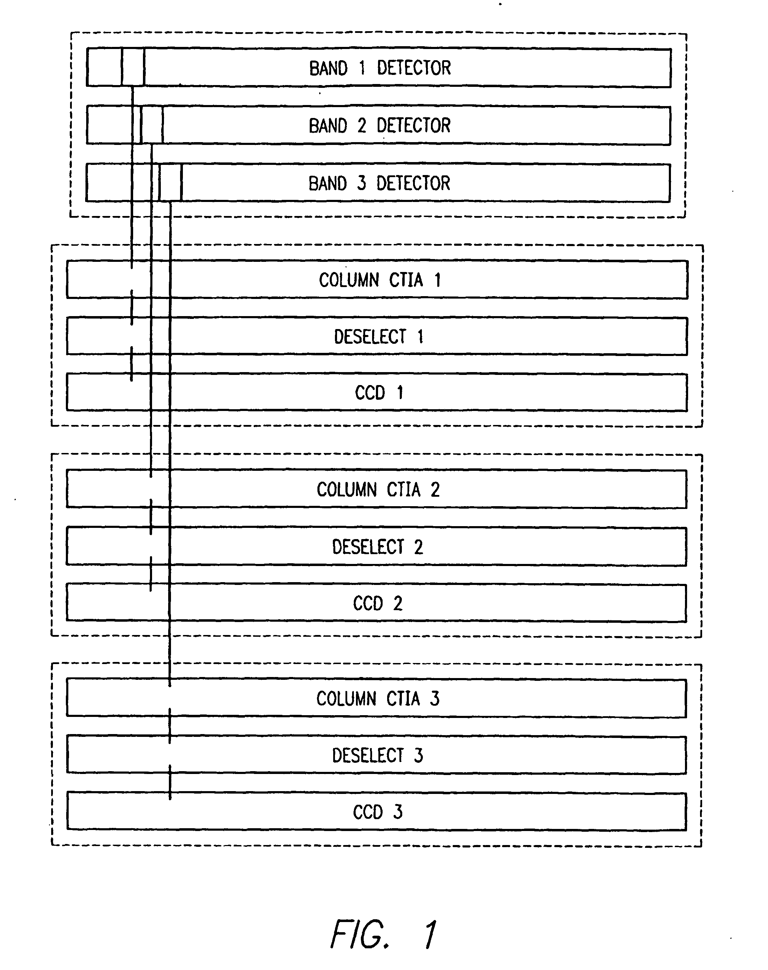

Figure 1 shows a SCA TDI architecture in which time delay integration is performed using a CCD array in a "side rider" configuration; *see, e.g.,* "High Performance InSb Scanning Sensor Chip with 26 In TDI," Proceedings of the IRIS, August, 1992. The side rider CCD implementation operates by injecting charge into every other bucket of the CCD circuit from the multiplexed unit cell outputs. Due to the size of the storage wells required in the CCD circuit of Figure 1 to reduce noise, the storage wells are typically large in area. Unfortunately, the design rules used for the integrated circuit do not allow for placing such large storage wells and the other elements of the BBD circuit 10 in the unit cell for unit cell areas of less than about 32um x 64um, thereby limiting the maximum resolution of the CCD sensing device.

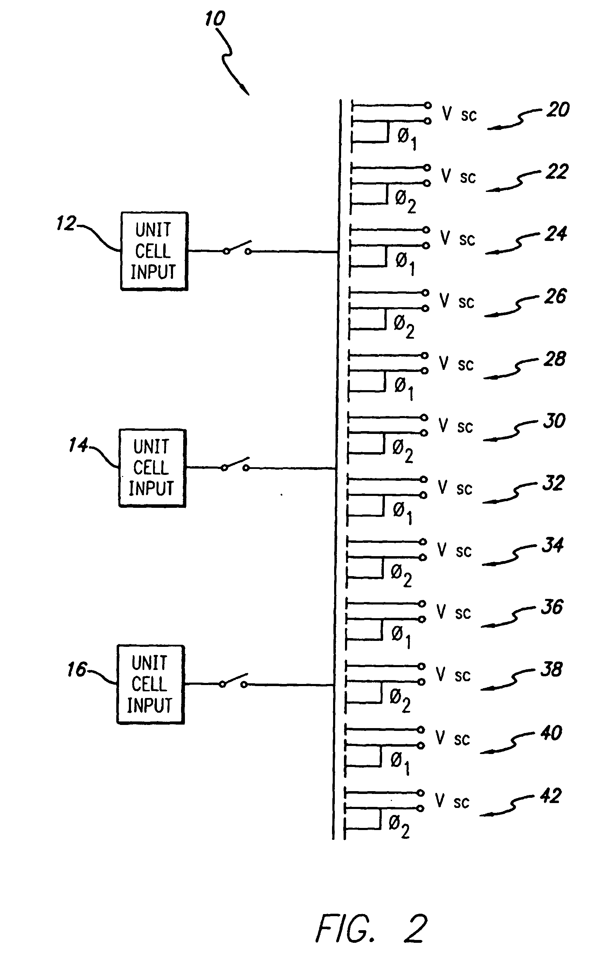

Figure 2 is an example of one type of bucket brigade ("BBD") circuit that is useful for implementing time delay integration.

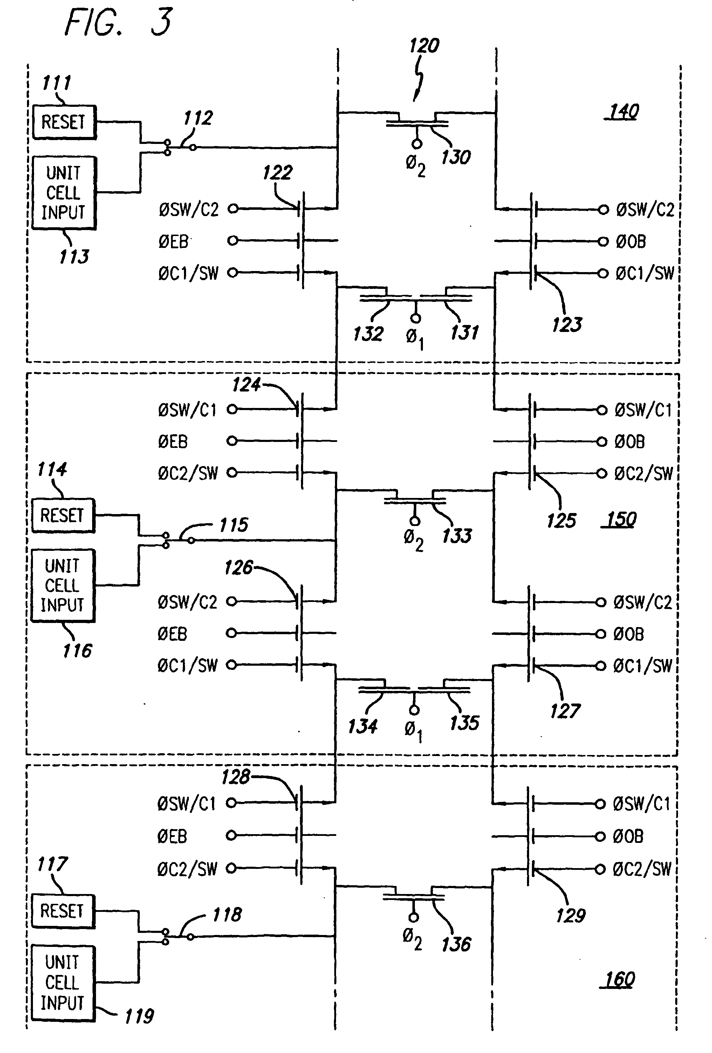

Figure 3 shows a representative segment of a duplex BBD circuit 120 which performs a SCA TDI with reduced ROIC circuitry, thus allowing the TDI function to be placed in the unit cells. With only conventional layout techniques and fabrication processes, reductions in ROIC area of up to about 70% over the side rider CCD implementation is achievable, which allows the duplex BBD circuit 120 to be place in an area of about 10um x 64um so that TDI may be performed in the unit cell with room still available for the input circuit. Hence, improved ROIC yields, reduced ROIC costs, and improved resolution relative to the side rider CCD implementation are realizable. Moreover, specialized processing used for the two level polysilicon structures used in the side rider CCD implementation is not required.

Size reduction is realizable in the duplex BBD circuit 120 for a number of reasons. For example, the duplex BBD circuit 120 reduces the number of transfers required to perform TDI by at least a factor of two, which allows the capacitor size to be reduced by a factor of the square root of two - the square root of the reduction in number of transfers - for the same noise performance when compared to a standard BBD implementation. The charge transfer efficiency required is reduced by a factor of 2 when compared to CCD or standard BBD implementations. Another example is the use of parallel signal paths implemented at the unit cell level, which allow sharing of a storage capacitor - only three storage capacitors are required to store two samples of information - to in effect achieve a reduction in the number of capacitors of about 25% for a two sample/dwell system and a reduction in total capacitor area. Accordingly, performance is improved with less ROIC complexity. Moreover, the common capacitors are easily reset prior to charge being added to improve the composite transfer efficiency and reduce crosstalk in the in scan direction, which is useful for achieving a good MTF in scanning SCAs. In general terms, a multiplex BBD structure used in a TDI circuit decreases the number of transfers of a TDI sample to the number of sensing elements independently of the number of samples per dwell, and increases the MFT through resetting of some of the BBD capacitors. The decrease in the number of transfers results in a reduction of the number of capacitors and the size of the capacitors, as well as an improved MTF.

Figure 3 shows three representative unit cells, illustratively partial cell 140, full cell 150, and partial cell 160, having respective unit cell inputs 113, 116 and 119. The even path of the duplex BBD circuit 120 has transfer gates such as MOSFET transistors 122, 124, 126 and 128 connected in series, and the odd path of the duplex BBD circuit 120 has transfer gates such as MOSFET transistors 123, 125, 127 and 129 connected in series. Suitable MOSFET transistors are well known in the art. Common capacitors 130, 133, and 136, which are controlled by clock phase 2, and even-odd capacitor pairs 132-131 and 134-135, which are controlled by clock phase 1, are alternately connected between the even and odd paths of the duplex BBD circuit 120. Suitable semiconductor capacitors are well known in the art. Transistor switch 112 controllably connects the common capacitor 130 to either unit cell input 113, reset 111, or open circuit. Similarly, transistor switch 115 controllably connects the common capacitor 133 to either unit cell input 116, reset 114, or open circuit; and transistor switch 118 controllably connects the common capacitor 136 to either unit cell input 119, reset 117, or open circuit. Suitable MOSFET transistor switches are well known in the art.

It will be appreciated that while the circuit 120 is shown as a duplex circuit having two charge transfer paths, illustratively designated odd and even, circuit 120 is to be considered to be representative of multiplex BBD circuits having two, three, or more charge transfer paths to achieve two, three, or more samples per dwell. A "dwell" is in effect the time over which charge is integrated. Although requiring more circuitry, systems that acquire a higher multiple of samples per dwell advantageously have improved sensitivity even while realizing size reduction.

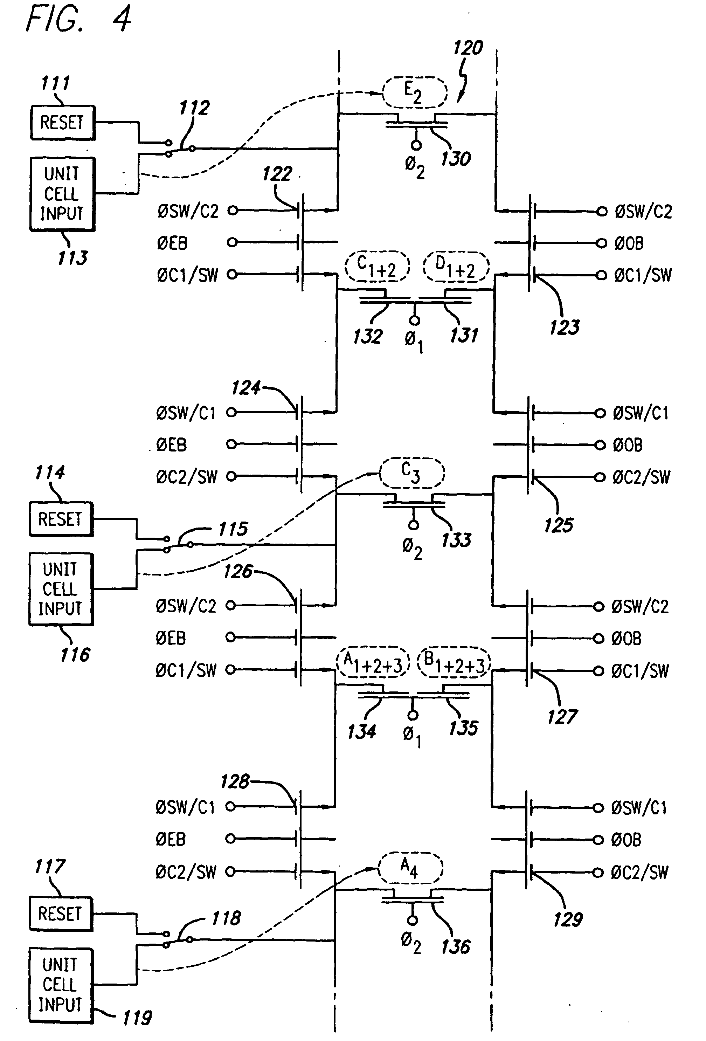

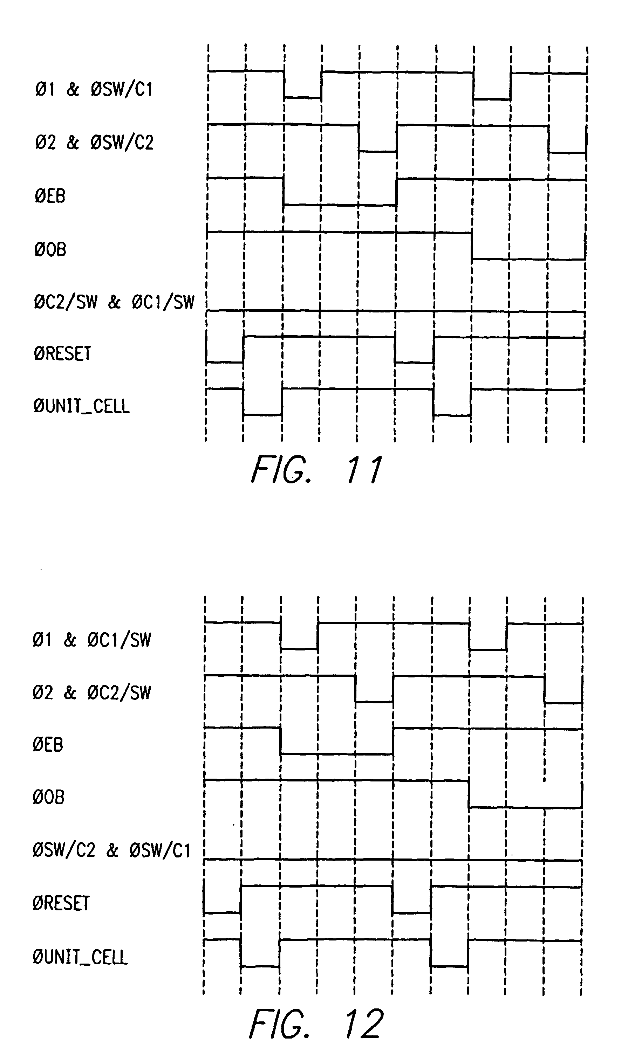

Operation of the duplex BBD circuit 120 is illustrated in Figures 4 through 10. In these figures, potential at a node is represented by a box containing a letter indicating the ground position that the detector started at, and numerical subscripts indicating the TDI number. The various clock and control signals used in the transfer-up and transfer-down process are shown in Figures 11 and 12 respectively.

Figure 4 is a circuit diagram of the duplex bucket brigade circuit of Figure 3 showing how unit cell charge is transferred into the duplex BBD circuit 120 for propagation down the even path. The common capacitors 130, 133 and 136 are presumed to start in a reset condition. Capacitors 131, 132, 134 and 135 respectively contain charge D₁₊₂, C₁₊₂, A₁₊₂₊₃, and B₁₊₂₊₃. Switches 112, 115 and 118 select unit cell inputs 113, 116 and 119 in synchronism with clock phase 2, thereby transferring charge E₂ to the common capacitor 130, charge C₃ to the common capacitor 133, and charge A₄ to the common capacitor 136.

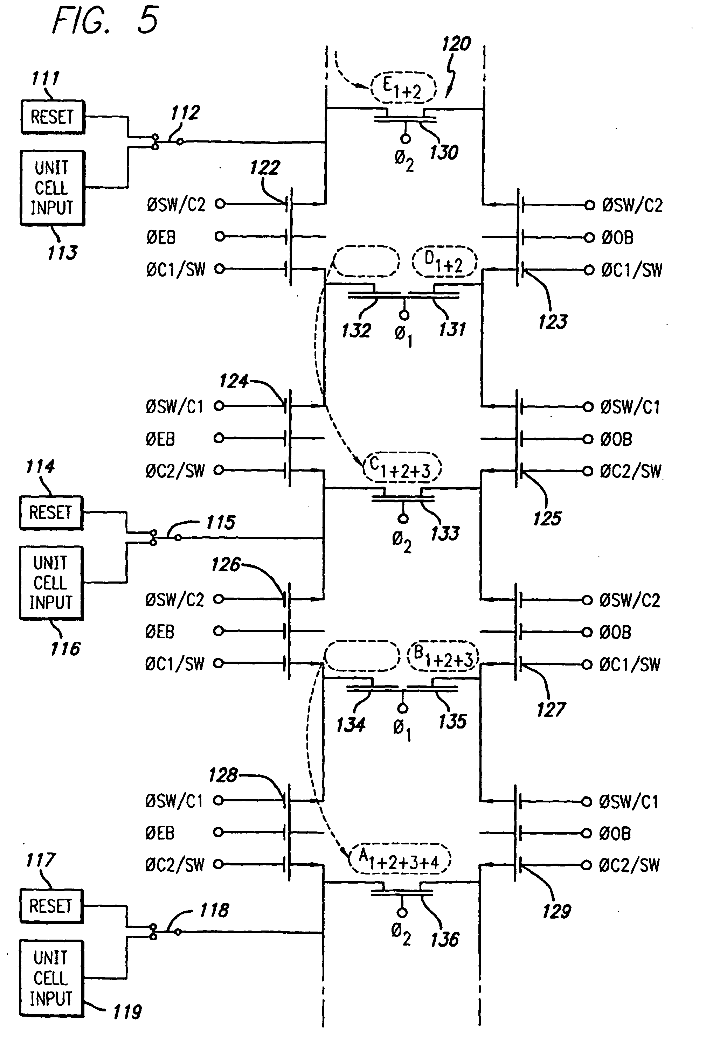

Figure 5 is a circuit diagram of the duplex bucket brigade circuit of Figure 3 showing how unit cell charge is added to previous even samples. Transistors 124 and 128 in the even path are enabled synchronously with clock phases Ø₁ and Ø₂, thereby moving charge C₁₊₂ through even path transistor 124 and adding it to charge C₃ on the common capacitor 133, and moving A₁₊₂₊₃ through even path transistor 128 and adding it to charge A₄ on the common capacitor 136. Charges D₁₊₂ and B₁₊₂₊₃ on the odd path capacitors 131 and 135 are undisturbed.

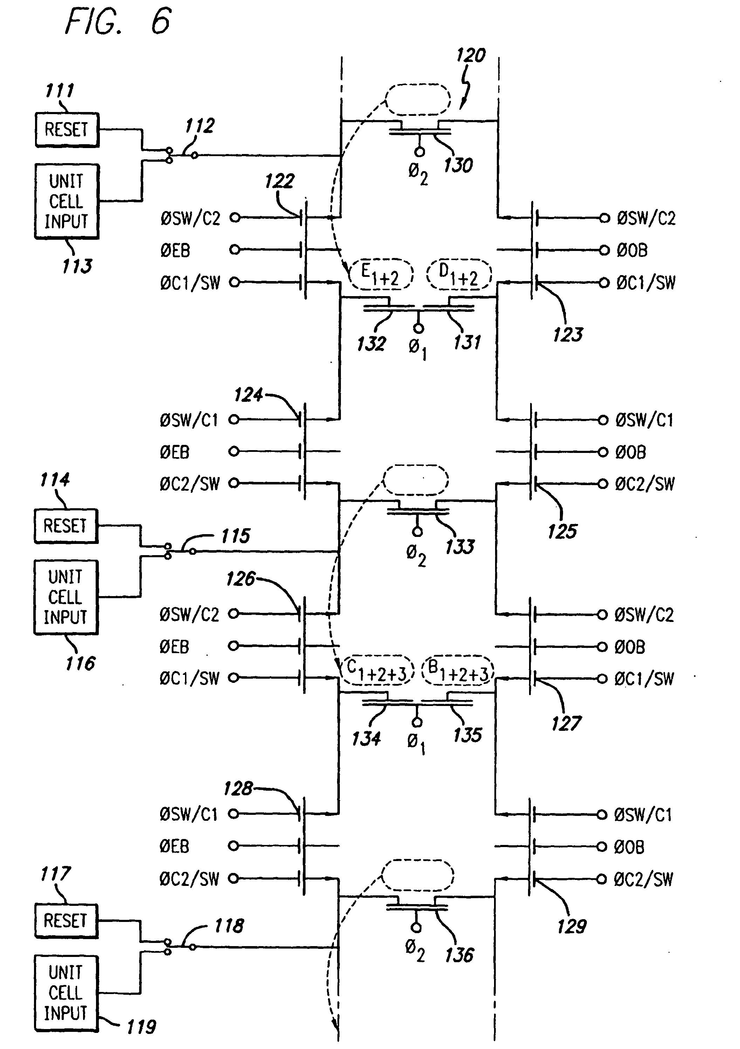

Figure 6 is a circuit diagram of the duplex bucket brigade circuit of Figure 3 showing how common capacitor charge is moved from the common capacitors to the even path capacitors so that the common capacitors are freed up for subsequent odd path operations. Transistors 122 and 126 in the even path are enabled synchronously with clock phases Ø₁ and Ø₂ , thereby moving charge E₁₊₂ through the even path transistor 122 and placing it on the even path capacitor 132, and moving charge C₁₊₂₊₃ through even path transistor 126 and placing it on the even path capacitor 134. Charges D₁₊₂ and B₁₊₂₊₃ on the odd path capacitors 131 and 135 are undisturbed.

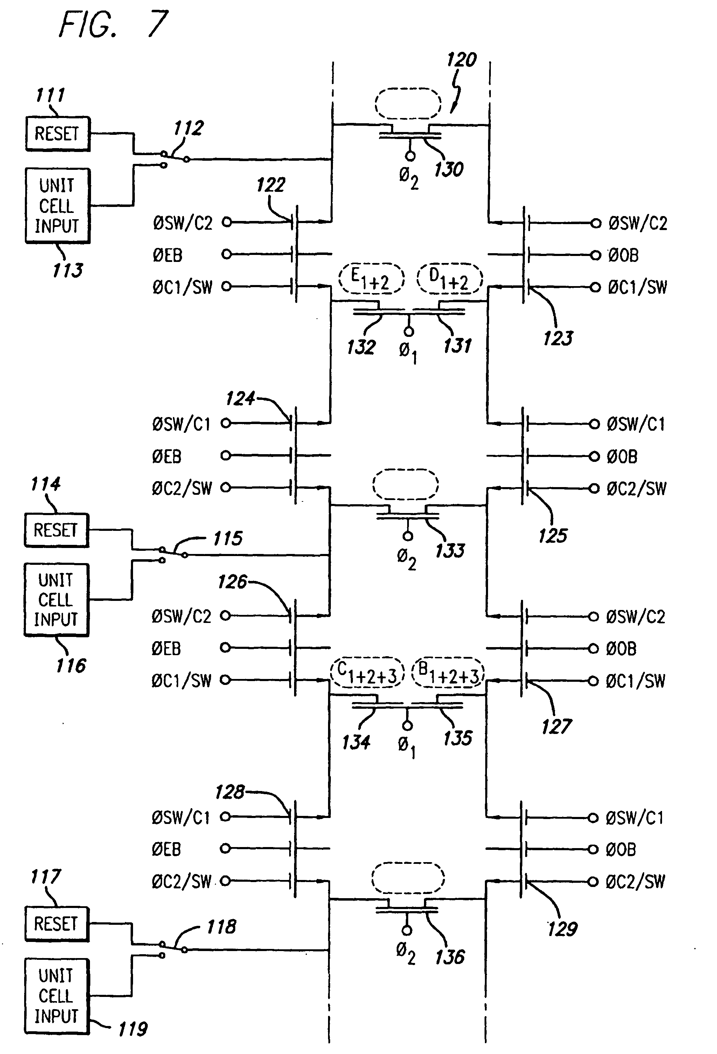

Figure 7 is a circuit diagram of the duplex bucket brigade circuit of Figure 3 showing how the common capacitors are reset. Switches 112, 115 and 118 select resets 111, 114 and 117 synchronously with clock phase Ø₂ , thereby resetting the common capacitors 130, 133 and 136. Transistors 122, 123, 124, 125, 126, 127, 128 and 129 are all OFF, so that charges D₁₊₂ on the odd path capacitor 131, charge E₁₊₂ on the even path capacitor 132, C₁₊₂₊₃ on the even path capacitor 134, and charge B₁₊₂₊₃ on the odd path capacitor 135 are undisturbed.

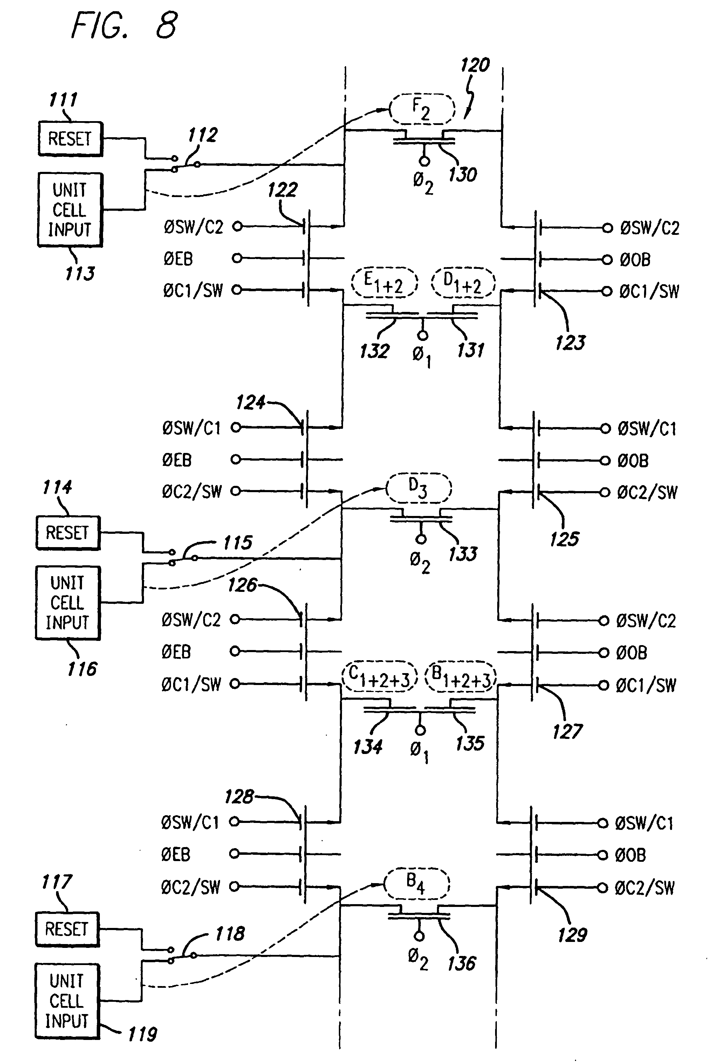

Figure 8 is a circuit diagram of the duplex bucket brigade circuit of Figure 3 showing how unit cell charge is transferred into the circuit for propagation down the odd path. The common capacitors 130, 133 and 136 are in a reset condition. Capacitors 131, 132, 134 and 135 respectively contain charge D₁₊₂, E₁₊₂, C₁₊₂₊₃, and B₁₊₂₊₃. Switches 112, 115 and 118 select unit cell inputs 113, 116 and 119 in synchronism with clock phase ∅₂, thereby transferring charge F₂ to common capacitor 130, charge D₃ to common capacitor 133, and charge B₄ to common capacitor 136.

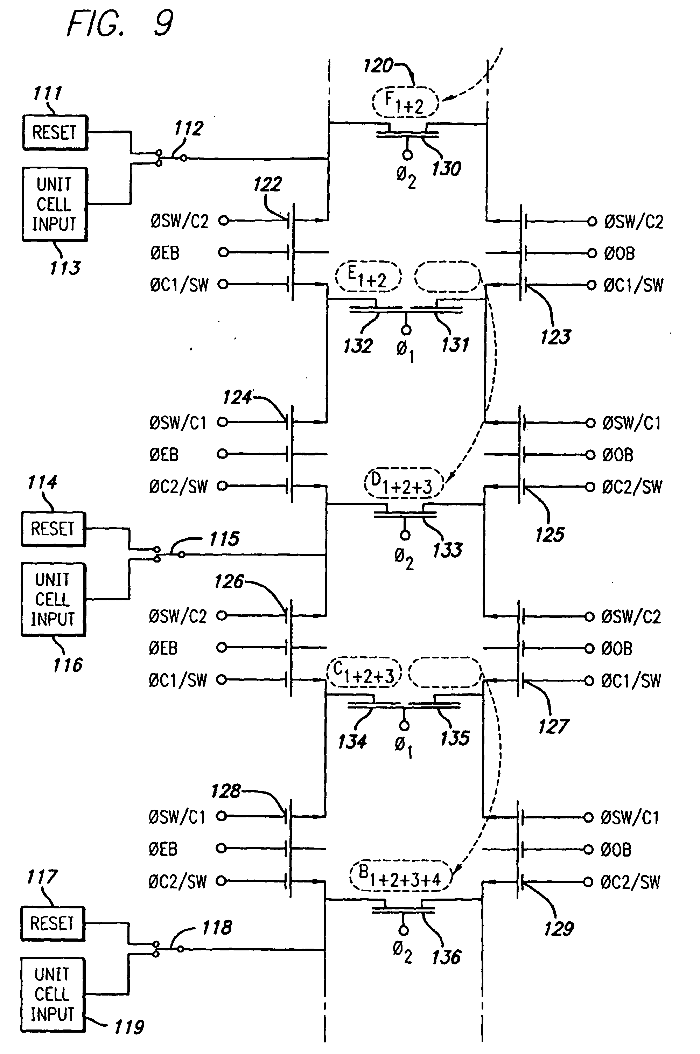

Figure 9 is a circuit diagram of the duplex bucket brigade circuit of Figure 3 showing how unit cell charge is added to previous odd samples. Transistors 125 and 129 in the odd path are enabled synchronously with clock phases ∅₁ and ∅₂ , thereby moving charge D₁₊₂ through the odd path transistor 125 and adding it to charge D₃ on the common capacitor 133, and moving charge B₁₊₂₊₃ through the odd path transistor 129 and adding it to charge B₄ on the common capacitor 136. Charges E₁₊₂ and C₁₊₂₊₃ on the even path capacitors 132 and 134 are undisturbed.

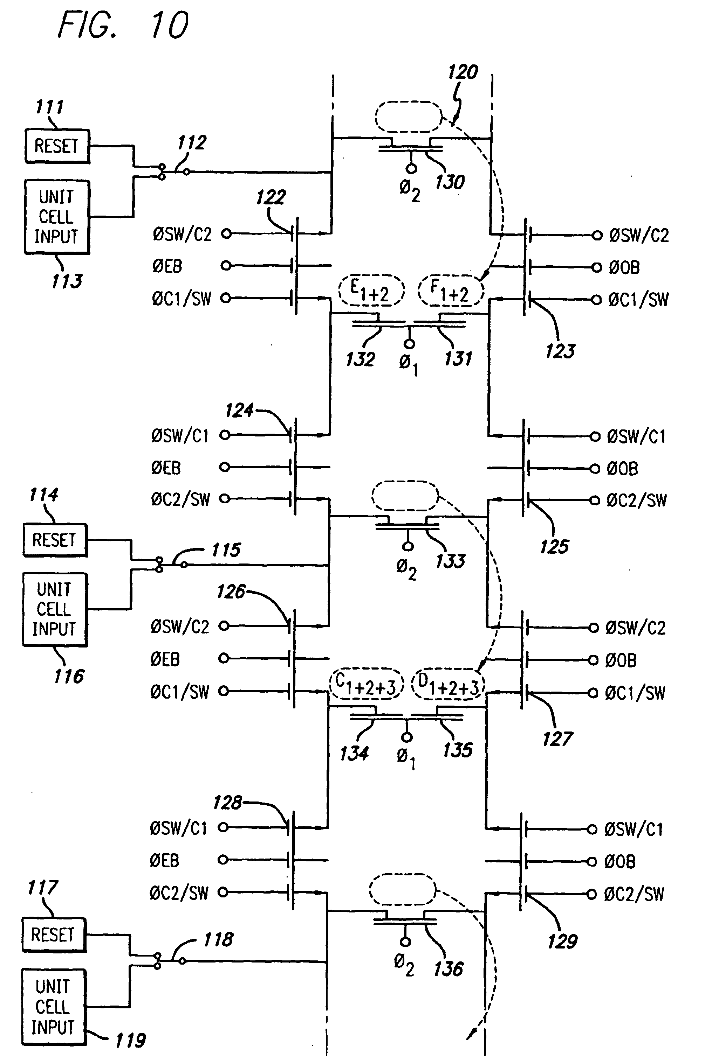

Figure 10 is a circuit diagram of the duplex bucket brigade circuit of Figure 3 showing how common capacitor charge is moved from the common capacitors to the odd path capacitors so that the common capacitors are freed up for subsequent even path operations. Transistors 123 and 127 in the odd path are enabled synchronously with clock phases Ø₁ and Ø₂, thereby moving charge F₁₊₂ through the odd path transistor 123 and placing it on the odd path capacitor 131, and moving charge D₁₊₂₊₃ through the odd path transistor 127 and placing it on the odd path capacitor 135. Charges E₁₊₂ and C₁₊₂₊₃ on the even path capacitors 132 and 134 are undisturbed.

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

Thus, the present invention has been described herein with reference to a particular embodiment for a particular application. Those having ordinary skill in the art and access to the present teachings will recognize additional modifications applications and embodiments within the scope thereof.

It is therefore intended by the appended claims to cover any and all such applications, modifications and embodiments within the scope of the present invention.

## Claims

1. A time delay integration circuit for acquiring a first plurality n of samples per dwell, comprising:
a first plurality n of charge transfer paths, each comprising transfer gates (122, 124, 126, 128; 123, 125, 127, 129), the transfer gates of each path coupled in series through path segments located therebetween;
a second plurality of first capacitors (130, 133, 136);
a second plurality of imaging sensor unit cell inputs (113, 116, 119) coupled through switches respectively to the first capacitors;
a second plurality of groups of *n* second capacitors (131, 132; 134, 135), **characterised in that**:
a first side of each first capacitor is connected to a pair of path segments in different charge transfer paths;
a first side of each capacitor in each group of said second plurality of groups of *n* second capacitors is connected to a path segment in a different charge transfer path and the second sides of the capacitors in each group are connected to each other; and
the transfer gates of each path are connected such that a first side of each transfer gate is coupled to a first capacitor and the second side of each transfer gate is coupled to a respective one of said n second capacitors in a group, the transfer gates of each path, in succession, being alternately enabled to transfer charge from said respective ones of said n second capacitors to the first capacitors and from the first capacitors to respective ones of the second capacitors.

2. A time delay integration circuit as in claim 1 further comprising a plurality of reset inputs (111, 114,117) controllably coupled respectively to the first capacitors.

3. A time delay integration circuit as in claim 1 or 2 further comprising a first phase clock node (∅₁) and a second phase clock node (∅₂), wherein the second side of each of the first capacitors is coupled to the second phase clock node and the second side of each of the second capacitors is coupled to the first phase clock node.

4. A time delay integration circuit as in claim 1, 2 or 3 further comprising a plurality n of path control signal nodes (Ø_{EB}, Ø_{OB}), a first transfer control signal node Ø_{C1/SW}, Ø_{SW/C1}), and a second transfer control signal node (Ø_{C2/SW}, Ø_{SW/C2}), wherein the transfer gates of each of the charge transfer paths are coupled to a respective one of the path control signal nodes, and adjacent transfer gates in the charge transfer paths are respectively coupled to the first transfer control signal node and to the second transfer control signal node.

5. A time delay integration circuit as in claim 1, 2, 3 or 4 wherein n equals 2 and wherein one of the charge transfer paths is an odd path and another of the charge transfer paths is an even path.

6. A time delay integration circuit as in claim 1, 2, 3, 4 or 5 wherein the transfer gates are MOSFET transistors.

7. A method of time delay integration of image sensor charges using a time delay integration circuit as in claim 1,2, 3,4,5 or 6, comprising:
storing accumulated image sensor charges from alternate sensor lines on respectively a plurality of first capacitors (132, 134) and a plurality of second capacitors (131, 135);
resetting a plurality of third capacitors (130,133,136);
receiving a first set of image sensor charges on the third capacitors;
transferring charge from the first capacitors respectively to the third capacitors through a set of first transfer gates (124, 128; 126, 122), wherein charge is accumulated on the third capacitors;
transferring charge from the third capacitors respectively to the first capacitors through a set of second transfer gates (122, 126; 128, 124);
resetting the third capacitors;
receiving a second set of image sensor charges on the third capacitors;
transferring charge from the second capacitors respectively to the third capacitors through a set of third transfer gates (125, 129; 127, 123), wherein charge is accumulated on the third capacitors; and
transferring charge from the third capacitors respectively to the second capacitors through a set of fourth transfer gates (123, 127; 129, 125).

## Patentansprüche

1. Zeitverzögerungs-Integrationsschaltung zum Erfassen einer ersten Vielzahl von n Abtastungen pro Ruhezeit, mit:
einer ersten Vielzahl von n Ladungs-Übertragungspfaden, wobei jeder Übertragungsgatter (122, 124, 126, 128; 123, 125, 127, 129) aufweist, wobei die Übertragungsgatter jedes Pfads in Reihe über dazwischenliegende Pfadsegmente gekoppelt sind;
einer zweiten Vielzahl von ersten Kondensatoren (130, 133, 136);
einer zweiten Vielzahl von Abbildungssensor-Einheitszelleneingängen (113, 116, 119), die über Schalter jeweils mit den ersten Kondensatoren gekoppelt sind;
einer zweiten Vielzahl von Gruppen von n zweiten Kondensatoren (131, 132; 134, 135), **dadurch gekennzeichnet, dass**
eine erste Seite jedes ersten Kondensators mit einem Paar von Pfadsegmenten in unterschiedlichen Ladungsübertragungspfaden verbunden ist;
eine erste Seite jedes Kondensators in jeder Gruppe der zweiten Vielzahl von Gruppen von n zweiten Kondensatoren mit einem Pfadsegment in einem unterschiedlichen Ladungsübertragungspfad verbunden ist und die zweiten Seiten der Kondensatoren jeder Gruppe miteinander verbunden sind; und
die Übertragungsgatter jedes Pfads so verbunden sind, dass eine erste Seite jedes Übertragungsgatters mit einem ersten Kondensator gekoppelt ist und die zweite Seite jedes Übertragungsgatters mit einem entsprechenden der n zweiten Kondensatoren in einer Gruppe verbunden ist, wobei die Übertragungsgatter jedes Pfads hintereinander abwechselnd in die Lage versetzt werden, Ladung von den jeweiligen der n zweiten Kondensatoren zu dem ersten Kondensator zu übertragen und von den ersten Kondensatoren zu jeweiligen der zweiten Kondensatoren.

2. Zeitverzögerungs-Integrationsschaltung nach Anspruch 1, ferner mit einer Vielzahl von Rücksetzeingängen (111, 114, 117), die steuerbar mit den jeweiligen ersten Kondensatoren verbunden sind.

3. Zeitverzögerungs-Integrationsschaltung nach Anspruch 1 oder 2, ferner mit einem ersten Phasentaktknoten (∅₁) und einem zweiten Phasentaktknoten (∅₂), wobei die zweite Seite jedes der ersten Kondensatoren mit dem zweiten Phasentaktknoten gekoppelt ist und die zweite Seite jedes der zweiten Kondensatoren mit dem ersten Phasentaktknoten gekoppelt ist.

4. Zeitverzögerungs-Integrationsschaltung nach Anspruch 1, 2 oder 3, ferner mit einer Vielzahl von n Pfadsteuerungssignalknoten (Ø_{EB}, Ø_{OB}). einem ersten Übertragungssteuerungssignalknoten (Ø_{C1/SW}, Ø_{SW/C1}) und einem zweiten Übertragungssteuerungssignalknoten (Ø_{C2/SW}, Ø_{SW/C2}), wobei die Übertragungsgatter jedes der Ladungsübertragungspfade mit einem jeweiligen der Pfadsteuerungssignalknoten gekoppelt sind, und benachbarte Übertragungsgatter in den Ladungsübertragungspfaden jeweils gekoppelt sind mit dem ersten Übertragungssteuerungssignalknoten und mit dem zweiten Übertragungssteuerungssignalknoten.

5. Zeitverzögerungs-Integrationsschaltung nach Anspruch 1, 2, 3 oder 4, wobei n gleich 2 ist und wobei einer der Ladungsübertragungspfade ein ungerader Pfad und ein anderer der Ladungsübertragungspfade ein gerader Pfad ist.

6. Zeitverzögerungs-Integrationsschaltung nach Anspruch 1, 2, 3, 4 oder 5, wobei die Übertragungsgatter MOSFET-Transistoren sind.

7. Verfahren zur Zeitverzögerungs-Integration von Bildsensorladungen, wobei eine Zeitverzögerungs-Integrationsschaltung nach Anspruch 1, 2, 3, 4, 5 oder 6 verwendet wird, mit:
Speichern akkumulierter Bildsensorladungen von abwechselnden Sensorzeilen in einer entsprechenden Vielzahl von ersten Kondensatoren (132, 134) und einer Vielzahl von zweiten Kondensatoren (131, 135);
Zurücksetzen einer Vielzahl von dritten Kondensatoren (130, 133, 136);
Empfangen einer ersten Menge von Bildsensorladungen auf den dritten Kondensatoren;
Übertragen der Ladung von den ersten Kondensatoren jeweils zu den dritten Kondensatoren über eine Menge von ersten Übertragungsgattern (124, 128; 126, 122), wobei Ladung auf den dritten Kondensatoren akkumuliert wird;
Übertragen von Ladung von den dritten Kondensatoren jeweils zu den ersten Kondensatoren über eine Menge von zweiten Übertragungsgattern (122, 126; 128, 124);
Zurücksetzen der dritten Kondensatoren;
Empfangen einer zweiten Menge von Bildsensorladungen auf den dritten Kondensatoren;
Übertragen der Ladung von den zweiten Kondensatoren jeweils zu den dritten Kondensatoren über eine Menge von dritten Übertragungsgattern (125, 129; 127, 123), wobei Ladung auf den dritten Kondensatoren akkumuliert wird; und
Übertragen der Ladung von den dritten Kondensatoren jeweils zu den zweiten Kondensatoren über eine Menge von vierten Übertragungsgattern (123, 127; 129, 125).

## Revendications

1. Circuit d'intégration de retard de temps pour acquérir une première pluralité n d'échantillons par attente, comprenant :
une première pluralité n de trajets de transfert de charges, comprenant chacun des portes de transfert (122, 124, 126, 128 ; 123, 125, 127, 129), les portes de transfert de chaque trajet étant couplées en série par l'intermédiaire de segments de trajet situés entre celles-ci ;
une deuxième pluralité de premiers condensateurs (130, 133, 136) ;
une deuxième pluralité d'entrées de cellules d'unité de capteur de réalisation d'image (113, 116, 119) couplées par l'intermédiaire de commutateurs, respectivement, aux premiers condensateurs ;
une deuxième pluralité de groupes de n deuxièmes condensateurs (131, 132 ; 134, 135), **caractérisé en ce que** :
un premier côté de chaque premier condensateur est connecté à une paire de segments de trajet dans des trajets de transfert de charges différents ;
un premier côté de chaque condensateur dans chaque groupe de ladite deuxième pluralité de groupes de n deuxièmes condensateurs est connecté à un segment de trajet dans un trajet de transfert de charges différent, et les deuxièmes côtés des condensateurs dans chaque groupe sont connectés entre eux ; et
les portes de transfert de chaque trajet sont connectées de telle sorte qu'un premier côté de chaque porte de transfert soit couplé à un premier condensateur et que le deuxième côté de chaque porte de transfert soit couplé à un condensateur respectif desdits n deuxièmes condensateurs dans un groupe, les portes de transfert de chaque trajet, successivement, étant validées en alternance pour transférer une charge desdits condensateurs respectifs desdits n deuxièmes condensateurs aux premiers condensateurs, et des premiers condensateurs à des condensateurs respectifs des deuxièmes condensateurs.

2. Circuit d'intégration de retard de temps selon la revendication 1, comprenant de plus une pluralité d'entrées de remise à zéro (111, 114, 117) couplées respectivement de façon à pouvoir être commandées aux premiers condensateurs.

3. Circuit d'intégration de retard de temps selon la revendication 1 ou 2, comprenant de plus un premier noeud d'horloge de phase (φ₁) et un deuxième noeud d'horloge de phase (φ₁₂), dans lequel le deuxième côté de chacun des premiers condensateurs est couplé au deuxième noeud d'horloge de phase et le deuxième côté de chacun des deuxièmes condensateurs est couplé au premier noeud d'horloge de phase.

4. Circuit d'intégration de retard de temps selon la revendication 1, 2 ou 3, comprenant de plus une pluralité n de noeuds de signal de commande de trajet (φ_{EB}, φ_{OB}), un premier noeud de signal de commande de transfert (φ_{C1/SW}, φ_{SW/C1}), et un deuxième noeud de signal de commande de transfert (φ_{C2/SW}, φ_{SW/C2}), dans lequel les portes de transfert de chacun des trajets de transfert de charges sont couplées à un noeud respectif des noeuds de signal de commande de trajet, et des portes de transfert adjacentes dans les trajets de transfert de charges sont respectivement couplées au premier noeud de signal de commande de transfert et au deuxième noeud de signal de commande de transfert.

5. Circuit d'intégration de retard de temps selon la revendication 1, 2, 3, ou 4, dans lequel n est égal à 2, et dans lequel l'un des trajets de transfert de charges est un trajet impair, et un autre des trajets de transfert de charges est un trajet pair.

6. Circuit d'intégration de retard de temps selon la revendication 1, 2, 3, 4 ou 5, dans lequel les portes de transfert sont des transistors métal-oxyde-semiconducteur complémentaires (MOSFET).

7. Procédé d'intégration de temps de retard de charges de capteur d'images utilisant un circuit d'intégration de retard de temps selon la revendication 1, 2, 3, 4, 5 ou 6, comprenant les étapes consistant à :
stocker des charges de capteur d'images accumulées à partir de lignes de capteur alternées respectivement sur une pluralité de premiers condensateurs (132, 134) et une pluralité de deuxièmes condensateurs (131, 135) ;
remettre à zéro une pluralité de troisièmes condensateurs (130, 133, 136) ;
recevoir un premier jeu de charges de capteur d'images sur les troisièmes condensateurs ;
transférer une charge à partir des premiers condensateurs respectivement vers les troisièmes condensateurs par l'intermédiaire d'un jeu de premières portes de transfert (124, 128 ; 126, 122), une charge étant accumulée sur les troisièmes condensateurs ;
transférer une charge à partir des troisièmes condensateurs respectivement vers les premiers condensateurs par l'intermédiaire d'un jeu de deuxièmes portes de transfert (122, 126 ; 128, 124) ;
remettre à zéro les troisièmes condensateurs ;
recevoir un deuxième jeu de charges de capteur d'images sur les troisièmes condensateurs ;
transférer une charge à partir des deuxièmes condensateurs respectivement vers les troisièmes condensateurs par l'intermédiaire d'un jeu de troisièmes portes de transfert (125, 129 ; 127, 123), une charge étant accumulée sur les troisièmes condensateurs ; et
transférer une charge à partir des troisièmes condensateurs respectivement vers les deuxièmes condensateurs par l'intermédiaire d'un jeu de quatrièmes portes de transfert (123, 127 ; 129, 125).
